# EUROPÄISCHE PATENTANMELDUNG

(11) **EP 4 075 616 A1**
(43) Veröffentlichungstag der Anmeldung: **19.10.2022**
(21) Anmeldenummer: 21168864.3
(22) Anmeldetag: 16.04.2021
(51) Int. Cl.: H02G 3/03, H02G 5/10, B60R 16/02

(54) **LEITUNGSANORDNUNG, VERBINDUNGSANORDNUNG UND ENERGIEÜBERTRAGUNGSSYSTEM**

(71) Anmelder: Rosenberger Hochfrequenztechnik GmbH & Co. KG, 83413 Fridolfing (DE)
(72) Erfinder: Dandl, Christian, 83413 Fridolfing (DE); Edfelder, Johann, 83404 Ainring (DE); Hegenauer, Johannes, 83346 Bergen (DE)
(74) Vertreter: Lorenz, Markus

(57) **Zusammenfassung**

Die Erfindung betrifft eine Leitungsanordnung (1), umfassend eine elektrische Leitung (2), die wenigstens einen elektrischen Isolator (4, 6) und wenigstens einen elektrischen Leiter (5) aufweist, der zumindest abschnittsweise anliegend an den elektrischen Isolator (4, 6) entlang einer Längsachse (L) der elektrischen Leitung (2) verläuft. Die Leitungsanordnung (1) weist außerdem einen passiven Wärmeabieiter (3) auf, der zumindest abschnittsweise entlang der Längsachse (L) verläuft, und der wenigstens einen wärmeaufnehmenden Flächenabschnitt (7) und wenigstens einen thermisch mit dem wärmeaufnehmenden Flächenabschnitt (7) verbundenen wärmeabgebenden Flächenabschnitt (8) aufweist. Der wärmeaufnehmende Flächenabschnitt (7) ist zumindest soweit an den elektrischen Leiter (5) angenähert, dass der wärmeaufnehmende Flächenabschnitt (7) mit dem elektrischen Leiter (5) eine thermische Wirkverbindung eingeht, um Abwärme des elektrischen Leiters (5) zu dem wärmeabgebenden Flächenabschnitt (8) abzuführen.

## Beschreibung

Die Erfindung betrifft eine Leitungsanordnung, umfassend eine elektrische Leitung, die wenigstens einen elektrischen Isolator und wenigstens einen elektrischen Leiter aufweist, gemäß dem Oberbegriff des Anspruchs 1.

Die Erfindung betrifft außerdem eine Verbindungsanordnung, aufweisend zwei elektrische Verbinder zur elektrischen Verbindung mit einer jeweiligen elektrischen Einrichtung, sowie eine Leitungsanordnung.

Die Erfindung betrifft ferner ein Energieübertragungssystem, aufweisend eine Verbindungsanordnung.

Besondere Anforderungen an Leiter-, Verbindungsanordnungen sowie Energieübertragungssysteme zur Übertragung elektrischer Energie werden insbesondere im Hochvoltbereich der Fahrzeugtechnik gestellt. Beispielsweise werden bei Elektro- und/oder Hybridfahrzeugen elektrische Leitungen verwendet, um Akkumulatoren untereinander zu verbinden, um Akkumulatoren mit elektrischem Ladestrom zu versorgen und um die in den Akkumulatoren gespeicherte Energie einem elektrischen Verbraucher zuzuführen. Hierzu werden mitunter Ströme von mehreren hundert Ampere bei Spannungen von mehreren hundert Volt übertragen.

Um den Wärmeeintrag in die Leitungsanordnung bei der Übertragung der hohen elektrischen Leistungen ausreichend gering zu halten, werden mitunter große Leitungsquerschnitte verwendet. Durch den damit einhergehenden hohen Materialbedarf steigen allerdings die Kosten für die Bereitstellung der Leitungen; ferner wird ein nicht unerheblicher Gewichtsanteil durch derartige Hochvoltleitungen in die Fahrzeuge eingebracht.

Alternativ oder ergänzend zu der Verwendung großer Leitungsquerschnitte ist es außerdem bekannt, die aufgrund des hohen Stromflusses in den elektrischen Leitern erzeugte Abwärme durch aktiv gekühlte Hochvoltkabel abzuführen. Bei derartigen Leitungen wird ein Kühlkanal in Längsrichtung durch die Leitung geführt, der an einen Kühlkreislauf angeschlossen und zum Abtransport der Wärme von einer Kühlflüssigkeit durchlaufen wird. Ein entsprechendes Kabel wird beispielsweise in der Druckschrift DE 199 21 310 A1 beschrieben.

Die bekannte Kühlungslösung ist äußerst aufwendig und kostspielig. Durch die vielen Bauteile zur Bereitstellung des Kühlkreislaufes benötigt die Kühlung außerdem vergleichsweise viel Bauraum. Die bekannten gekühlten Leitungen sind damit auch nur bedingt massentauglich.

Neben der Verwendung in der Hochvolttechnik können gekühlte Leitungen auch in der Nachrichtentechnik vorteilhaft sein, da durch die Kühlung höhere Leistungsdichten bei derselben Grenztemperatur erreicht werden können. Die Nachteile der bekannten Kühlungstechniken wiegen allerdings schwerer als die genannten Vorteile, weshalb gekühlte Leitungen in der Nachrichtentechnik derzeit in der Regel noch nicht zum Einsatz kommen.

In Anbetracht des bekannten Standes der Technik besteht die Aufgabe der vorliegenden Erfindung darin, eine Leitungsanordnung bereitzustellen, die eine kostengünstige, robuste und dennoch effektive Wärmeableitung aus der elektrischen Leitung ermöglicht.

Der vorliegenden Erfindung liegt auch die Aufgabe zugrunde, eine Verbindungsanordnung und ein Energieübertragungssystem mit einer hinsichtlich der Wärmeableitung verbesserten Leitungsanordnung bereitzustellen.

Die Aufgabe wird für die Leitungsanordnung mit den in Anspruch 1 aufgeführten Merkmalen gelöst. Hinsichtlich der Verbindungsanordnung wird die Aufgabe durch die Merkmale des Anspruchs 14 und betreffend das Energieübertragungssystem durch Anspruch 15 gelöst.

Die abhängigen Ansprüche und die nachfolgend beschriebenen Merkmale betreffen vorteilhafte Ausführungsformen und Varianten der Erfindung.

Es ist eine Leitungsanordnung vorgesehen, umfassend eine elektrische Leitung.

Die elektrische Leitung kann insbesondere zum Transport elektrischer Energie vor dem Hintergrund der Energieversorgung und/oder der Signalübertragung in der Nachrichtentechnik oder Hochfrequenztechnik ausgebildet sein. Die elektrische Leitung kann hierzu mit einem elektrischen Stromkreis oder Stromnetz verbunden sein, insbesondere um zwei oder mehr elektrische Einrichtungen miteinander zu verbinden, beispielsweise um eine elektrische Stromquelle oder mehrere elektrische Stromquellen mit einem elektrischen Verbraucher oder mit mehreren elektrischen Verbrauchern zu verbinden.

Bei einer elektrischen Leitung im Rahmen der Erfindung kann es sich um flexible oder nicht flexible Leitungen handeln. Bei der elektrischen Leitung kann es sich um ein elektrisches Kabel handeln, beispielsweise um ein Hochvoltkabel oder um ein Datenkabel. Es kann sich bei der elektrischen Leitung beispielsweise aber auch um eine Stromschienenleitung oder um eine Strombandleitung handeln.

Optional kann die Leitungsanordnung auch mehr als eine elektrische Leitung aufweisen, beispielsweise zwei elektrische Leitungen, drei elektrische Leitungen, vier elektrische Leitungen oder noch mehr elektrische Leitungen, mit jeweils identischem oder unterschiedlichem Aufbau, wobei die zusätzlichen elektrischen Leitungen vorzugsweise den nachfolgend beschriebenen Aufbau aufweisen, gegebenenfalls aber auch einen herkömmlichen Aufbau aufweisen können.

Erfindungsgemäß weist die elektrische Leitung wenigstens einen elektrischen Isolator und wenigstens einen elektrischen Leiter auf. Der elektrische Leiter verläuft zumindest abschnittsweise anliegend an den elektrischen Isolator entlang einer Längsachse der elektrischen Leitung.

Der elektrische Leiter kann grundsätzlich aus einem beliebigen Material ausgebildet sein, mit dem eine niederohmig leitende Verbindung bereitstellbar ist. Der elektrische Leiter kann vorzugsweise aus einem Metall ausgebildet sein, beispielsweise aus Kupfer, Aluminium und/oder Silber.

Der elektrische Leiter kann als Draht, Litze (also als Verbund mehrerer Einzeldrähte), Band oder Schiene ausgebildet sein. Vorzugsweise ist der elektrische Leiter ein längliches Bauteil.

In einer Weiterbildung der Erfindung kann vorgesehen sein, dass der wenigstens eine elektrische Leiter als länglicher Flachleiter mit einem flachen Querschnitt ausgebildet ist. Grundsätzlich kommen allerdings beliebige Querschnitte bzw. Geometrien zur Ausbildung des elektrischen Leiters in Frage. Insofern mehrere elektrische Leiter vorgesehen sind, können diese auch verschieden ausgebildet sein bzw. verschiedene Querschnitte aufweisen. Der wenigstens eine elektrische Leiter kann beispielsweise auch einen runden, quadratischen oder kammförmigen Querschnitt aufweisen.

Vorzugsweise verlaufen die Längsachsen der Leitungsanordnung, der elektrischen Leitung, des elektrischen Isolators und/oder des elektrischen Leiters zumindest im Wesentlichen, vorzugsweise vollständig, parallel, gegebenenfalls sogar koaxial zueinander.

Die elektrische Leitung kann genau einen elektrischen Leiter aufweisen. Grundsätzlich kann die elektrische Leitung allerdings eine beliebige Anzahl elektrischer Leiter aufweisen, vorzugsweise genau zwei elektrische Leiter, gegebenenfalls aber auch mehr als zwei elektrische Leiter, beispielsweise drei, vier, fünf, sechs, sieben, acht oder noch mehr elektrische Leiter mit jeweils identischem oder verschiedenem Aufbau. Insofern mehrere elektrische Leiter vorgesehen sind, verlaufen diese vorzugsweise nebeneinander oder verschränkt bzw. verseilt entlang der Längsachse der elektrischen Leitung. Vorzugsweise sind die mehreren elektrischen Leiter voneinander beabstandet bzw. elektrisch voneinander isoliert.

Der Leiterquerschnitt des wenigstens einen elektrischen Leiters kann beispielsweise bis zu 10 mm², vorzugsweise bis zu 30 mm², besonders bevorzugt bis zu 60 mm², noch weiter bevorzugt bis zu 90 mm², beispielsweise auch bis zu 200 mm² oder mehr betragen. Insbesondere kann ein Leiterquerschnitt vorgesehen sein, der sich für eine elektrische Energieübertragung in der Hochvolttechnik eignet, also zur Übertragung hoher elektrischer Ströme (beispielsweise 100 A bis 2 kA) bei Wechselspannungen von 30 V bis 1 kV oder mehr oder Gleichspannungen von 60 V bis 2,0 kV oder mehr, insbesondere in der Fahrzeugtechnik.

Der elektrische Isolator, der nachfolgend noch näher beschrieben wird, kann als Komponente der elektrischen Leitung zur Erfüllung verschiedener Aufgaben ausgebildet sein. Der elektrische Isolator kann als Berührschutz dienen, um zu vermeiden, dass Personen, Gegenstände oder Tiere unbeabsichtigt in Kontakt mit dem elektrischen Leiter kommen. Der elektrische Isolator kann außerdem zur Beabstandung mehrerer elektrischer Leiter verwendbar sein. Außerdem kann der elektrische Isolator den wenigstens einen elektrischen Leiter mechanisch fixieren, führen und/oder gegen mechanische Beschädigung schützen.

Der elektrische Isolator kann grundsätzlich aus einem beliebigen Material ausgebildet sein, das eine gute elektrische Isolationswirkung hat. Vorzugsweise kann der elektrische Isolator aus Silikon ausgebildet sein, beispielsweise aus einem Silikonschlauch oder einem Silikonband. Es können aber auch andere synthetische Polymere und sonstige Materialien vorgesehen sein.

Die elektrische Leitung kann genau einen elektrischen Isolator aufweisen. Grundsätzlich kann die elektrische Leitung allerdings eine beliebige Anzahl elektrische Isolatoren aufweisen, vorzugsweise genau zwei elektrische Isolatoren, gegebenenfalls aber auch mehr als zwei elektrische Isolatoren, beispielsweise drei, vier, fünf, sechs, sieben, acht oder noch mehr elektrische Isolatoren mit jeweils identischem oder verschiedenem Aufbau. Insofern mehrere elektrische Isolatoren vorgesehen sind, verlaufen diese vorzugsweise nebeneinander und/oder ineinander entlang der Längsachse der elektrischen Leitung.

Der wenigstens eine elektrische Leiter kann an dem wenigstens einen elektrischen Isolator befestigt sein und/oder in bzw. an dem elektrischen Isolator geführt sein. Der wenigstens eine elektrische Leiter kann durch beliebige formschlüssige, kraftschlüssige und/oder stoffschlüssige Techniken mit dem wenigstens einen elektrischen Isolator verbunden sein.

Erfindungsgemäß weist die Leitungsanordnung wenigstens einen passiven Wärmeableiter auf, der zumindest abschnittsweise entlang der Längsachse verläuft.

Der Wärmeableiter ist vorzugsweise aus einem Metall, beispielsweise aus einem Blech, ausgebildet. Vorzugsweise ist der Wärmeableiter ein längliches Bauteil, besonders bevorzugt ein flaches, längliches Bauteil. Der Wärmeableiter kann einteilig bzw. einstückig ausgebildet sein, vorzugsweise als Stanz-Biegeteil.

Der Wärmeableiter kann grundsätzlich aus einem beliebigen Material ausgebildet sein, ist vorzugsweise aber aus einem Material mit hoher Wärmeleitfähigkeit ausgebildet, wie beispielsweise aus einem Material mit einer Wärmeleitfähigkeit von 10 W/(m·K) oder mehr, vorzugsweise 100 W/(m·K) oder mehr, besonders bevorzugt 200 W/(m·K) oder mehr, noch weiter bevorzugt 400 W/(m·K) oder mehr. Beispielsweise kann der Wärmeableiter aus einem Kupferblech oder aus einem Aluminiumblech ausgebildet sein.

Bei dem Wärmeableiter handelt es sich vorzugsweise nicht um ein Rohr oder eine Leitung zum Transport eines Fluids im Rahmen einer aktiven Kühlung.

Die elektrische Leitung kann vorzugsweise genau einen passiven Wärmeableiter aufweisen. Grundsätzlich kann die elektrische Leitung allerdings eine beliebige Anzahl (passiver) Wärmeableiter aufweisen, beispielsweise zwei (passive) Wärmeableiter, gegebenenfalls aber auch mehr als zwei (passive) Wärmeableiter, beispielsweise drei, vier, fünf, sechs, sieben, acht oder noch mehr (passive) Wärmeableiter mit jeweils identischem oder verschiedenem Aufbau. Insofern mehrere (passive) Wärmeableiter vorgesehen sind, verlaufen diese vorzugsweise entlang der Längsachse der elektrischen Leitung axial versetzt zueinander, gegebenenfalls aber auch teilweise oder vollständig axial überlappend bzw. parallel / nebeneinander.

Vorzugsweise ist der passiven Wärmeableiter von dem wenigstens einen elektrischen Leiter beabstandet bzw. elektrisch von dem wenigstens einen elektrischen Leiter isoliert. In Sonderfällen kann der passive Wärmeableiter allerdings auch mit zumindest einem der elektrischen Leiter elektrisch in Verbindung stehen, beispielsweise für Niederspannungsanwendungen, oder wenn der Wärmeableiter mit keiner sonstigen leitfähigen Komponente elektrisch leitfähig in Verbindung steht.

Vorzugsweise weist die elektrische Leitung keine aktive Kühlung bzw. keinen aktiven Wärmeableiter auf. Der passive Wärmeableiter wird nachfolgend zur Vereinfachung deshalb teilweise auch nur als "Wärmeableiter" bezeichnet.

Erfindungsgemäß weist der Wärmeableiter wenigstens einen wärmeaufnehmenden Flächenabschnitt und wenigstens einen thermisch mit dem wärmeaufnehmenden Flächenabschnitt verbundenen, wärmeabgebenden Flächenabschnitt auf. Der Wärmeableiter vermag somit über den wärmeaufnehmenden Flächenabschnitt Wärme aufzunehmen, insbesondere durch Wärmeleitung, Wärmekonvektion oder Wärmestrahlung, und entlang eines Wärmepfades in Richtung des wärmeabgebenden Flächenabschnitts abzuführen. Der wärmeabgebende Flächenabschnitt kann hierzu mit einer angrenzenden, nachfolgend noch näher beschriebenen Wärmesenke thermisch verbunden sein.

Vorzugsweise sind die wärmeaufnehmenden Flächenabschnitte und die wärmeabgebenden Flächenabschnitte einteilig miteinander verbunden. Die Flächenabschnitte können insbesondere verschiedene Flächenabschnitte eines gemeinsamen, den passiven Wärmeableiter bildenden Blechwerkstoffs sein.

Insofern mehrere wärmeaufnehmende Flächenabschnitte vorgesehen sind, sind diese vorzugsweise entlang der Längsachse der elektrischen Leitung axial zueinander versetzt. Dies gilt analog auch für mehrere wärmeabgebende Flächenabschnitte, die dann beispielsweise die nachfolgend noch beschriebenen, einzelnen Fahnen ausbilden können. Grundsätzlich können mehrere wärmeabgebende / wärmeaufnehmende Flächenabschnitte allerdings auch an derselben axialen Position entlang der Längsachse angeordnet sein oder zumindest teilweise axial überlappen, beispielsweise indem die Flächenabschnitte gerafft, aufgefächert oder kammförmig ausgebildet sind.

Erfindungsgemäß ist der wärmeaufnehmende Flächenabschnitt zumindest soweit an den elektrischen Leiter angenähert, dass der wärmeaufnehmende Flächenabschnitt mit dem elektrischen Leiter eine thermische Wirkverbindung eingeht, um Abwärme des elektrischen Leiters zu dem wärmeabgebenden Flächenabschnitt abzuführen.

Unter dem Abführen von Abwärme von dem wenigstens einen elektrischen Leiter wird insbesondere eine messbare, für die praktische Anwendung der Leitungsanordnung relevante Wärmeabfuhr verstanden. Insbesondere dergestalt, dass durch die Entwärmung des elektrischen Leiters durch Wärmeabgabe an den wärmeaufnehmenden Flächenabschnitt der elektrische Leiter im Regelbetrieb eine definierte Maximaltemperatur nicht zu übersteigen vermag, also wegen der thermischen Wirkverbindung zu dem Wärmeableiter nicht überhitzen kann.

Der wärmeaufnehmende Flächenabschnitt des Wärmeableiters wird vorzugsweise so nah wie technisch möglich an den wärmeerzeugenden elektrischen Leiter angenähert, ist vorzugsweise allerdings elektrisch von dem elektrischen Leiter isoliert.

Der wärmeaufnehmende Flächenabschnitt kann sich insbesondere auch angrenzend an mehrere elektrische Leiter entlang der Längsachse durch die elektrische Leitung erstrecken, beispielsweise zwischen zwei benachbarten elektrischen Leitern verlaufen oder um mehrere elektrische Leiter zumindest teilweise umlaufend verlaufen.

Durch Verwendung des vorgeschlagenen, passiven Wärmeableiters kann der Aufbau einer elektrischen Leitung zur Verwendung in der Hochvolttechnik, Nachrichtentechnik oder Hochfrequenztechnik technisch einfach sein, trotz der bereitgestellten Kühlung, was die elektrische Leitung besonders wirtschaftlich herstellbar macht. Die vorgeschlagene Leitungsanordnung ist damit auch vorteilhaft für die Massenfertigung geeignet.

Die Erfinder haben erkannt, dass die passive Wärmeabführung hervorragende Ergebnisse liefern, und demnach eine vorteilhafte Alternative zu einer aktiven Kühlung darstellen kann. Auf die Bereitstellung eines aufwendigen Kühlkreislaufes kann vorzugsweise vollständig verzichtet werden.

An dieser Stelle sei betont, dass in Ergänzung zu dem passiven Wärmeableiter durchaus auch eine aktive Kühlung vorgesehen sein kann, vorzugsweise allerdings nicht innerhalb der elektrischen Leitung, sondern angrenzend an die elektrische Leitung, beispielsweise um die Wärme von dem wärmeabgebenden Flächenabschnitt des Wärmeableiters mittels eines Fluids (Flüssigkeit oder Gas) aktiv mittels einer Strömungsmaschine abzuführen (z. b. durch eine Pumpe oder einen Ventilator) und optional an anderer Stelle nutzbar zu machen. In der Regel ist eine ergänzende aktive Kühlung allerdings nicht erforderlich.

In einer vorteilhaften Weiterbildung der Erfindung kann vorgesehen sein, dass der wenigstens eine elektrische Isolator als elektrisch isolierende Umhüllung bzw. Kabelmantel ausgebildet ist, wobei der wenigstens eine elektrische Leiter zumindest abschnittsweise entlang der Längsachse innerhalb der elektrisch isolierenden Umhüllung verläuft. Vorzugsweise erstrecken sich alle Komponenten der elektrischen Leitung innerhalb der isolierenden Umhüllung. Die isolierende Umhüllung kann somit eine schützende Außenhülle für die elektrische Leitung darstellen, insbesondere zum Berührschutz, zum mechanischen Schutz (beispielsweise gegenüber Beschädigung, Korrosion und/oder Verschmutzung) und/oder zur Abdichtung gegenüber Flüssigkeiten, Gasen und/oder Verschmutzungspartikeln.

In einer Weiterbildung der Erfindung kann auch vorgesehen sein, dass der wenigstens eine Isolator als elektrisch isolierendes Distanzelement ausgebildet ist, wobei zumindest zwei der elektrischen Leiter mittels des elektrisch isolierenden Distanzelements voneinander beabstandet sind.

Insofern die elektrische Leitung lediglich einen einzigen elektrischen Isolator aufweist, so ist dieser bei Vorhandensein nur eines einzigen elektrischen Leiters vorzugsweise als isolierende Umhüllung (in der Art eines Kabelmantels) und bei Vorhandensein von wenigstens zwei elektrischen Leitern als isolierendes Distanzelement ausgebildet (mit lediglich optionaler, vollständiger Umhüllung der beiden Leiter).

Es kann grundsätzlich vorgesehen sein, dass zusätzlich zu einem elektrisch isolierenden Distanzelement noch eine separate elektrisch isolierende Umhüllung vorgesehen ist, insbesondere um mehrere von dem zumindest einen isolierenden Distanzelement voneinander beabstandete elektrische Leiter und das isolierende Distanzelement gemeinsam zu umhüllen.

Gemäß einer Weiterbildung der Erfindung kann vorgesehen sein, dass der Wärmeableiter aus einem flachen, länglichen Werkstoff ausgebildet ist. Der Wärmeableiter kann in Bezug auf seine Längserstreckung eine erste Längsbegrenzung und eine zweite Längsbegrenzung (also ein erstes und ein zweites längsseitiges Ende) und in Bezug auf seine Quererstreckung eine erste Querbegrenzung und eine zweite Querbegrenzung (also ein erstes und ein zweites querseitiges Ende) aufweisen.

Vorzugsweise weist der Wärmeableiter zwei sich parallel gegenüberliegende Hauptseitenflächen auf, sowie in Bezug auf die Quererstreckung der Hauptseitenflächen eine nur geringe Dicke, beispielsweise eine Dicke von nur wenigen Millimetern (beispielsweise eine Dicke von bis zu 10 mm, vorzugsweise eine Dicke von bis zu 5 mm, weiter bevorzugt eine Dicke von bis zu 2 mm, beispielsweise eine Dicke von bis zu 1 mm). Als "Hauptseitenflächen" werden vorliegend die beiden flächenmäßig größten Seitenflächen des Wärmeableiters bezeichnet. Die Flächenabschnitte (wärmeaufnehmend und wärmeabgebend) sind vorzugsweise auf den Hauptseitenflächen verteilt bzw. erstrecken sich zumindest über Teilbereiche der Hauptseitenflächen, wie nachfolgend noch beschrieben wird.

Vorzugsweise entspricht die Länge des Wärmeableiters zumindest im Wesentlichen, vorzugsweise exakt, der Länge des elektrischen Leiters.

Es kann vorgesehen sein, dass sich der wärmeaufnehmende Flächenabschnitt und der wärmeabgebende Flächenabschnitt jeweils auf einer der Hauptseitenflächen oder auf beiden Hauptseitenflächen aufspannen, also in Längsrichtung (bezogen auf die Längsachse) und in Querrichtung erstrecken.

Beispielsweise kann jeder der beiden Flächenabschnitte von einer der beiden Querbegrenzungen ausgehen. Ausgehend von der ersten Querbegrenzung kann sich somit vorzugsweise der wärmeaufnehmende Flächenabschnitt und ausgehend von der zweiten Querbegrenzung der wärmeabgebende Flächenabschnitt erstrecken, wobei die Flächenabschnitte in einem Mittelabschnitt zwischen den beiden Querbegrenzungen ineinander übergehen können. Der Mittelabschnitt kann zwischen querseitigen Endabschnitten des Wärmeableiters angeordnet sein, wobei sich die querseitigen Endabschnitte ausgehend von den Querbegrenzungen erstrecken. Der Wärmeableiter vermag die Wärme ausgehend von der einen Querbegrenzung somit zu der anderen Querbegrenzung abzuführen.

Es kann allerdings auch vorgesehen sein, dass der wärmeaufnehmende Flächenabschnitt oder der wärmeabgebende Flächenabschnitt nur in einem Mittelabschnitt zwischen den beiden Querbegrenzungen aufgespannt ist, wobei sich wenigstens einer der andere Flächenabschnitte ausgehend von zumindest einer der beiden Querbegrenzungen erstreckt, vorzugsweise ausgehend von beiden Querbegrenzungen. Ein Mittelabschnitt zwischen den beiden Querbegrenzungen kann somit wahlweise den wärmeaufnehmenden oder den wärmeabgebenden Flächenabschnitt ausbilden, wobei sich ausgehend von einer oder beiden Querbegrenzungen jeweils einer der anderen Flächenabschnitte erstreckt.

Grundsätzlich können der wärmeaufnehmende Flächenabschnitt und der wärmeabgebende Flächenabschnitt allerdings beliebig über die Seitenflächen des passiven Wärmeableiters verteilt sein, insbesondere auf den Hauptseitenflächen verteilt sein. Beispielsweise kann vorgesehen sein, dass der wärmeaufnehmende Flächenabschnitt auf der dem elektrischen Leiter zugewandten Hauptseitenfläche des Wärmeableiters und der wärmeabgebende Flächenabschnitt auf der dem elektrischen Leiter abgewandten Hauptseitenfläche des Wärmeableiters angeordnet ist, wobei sich die Flächenabschnitte ggf. auch vollständig über die jeweilige Hauptseitenfläche erstrecken können.

Der Wärmeableiter kann optional auch als hülsenförmiges Blechbauteil ausgebildet sein, beispielsweise als tiefgezogenes, hülsenförmiges Blechbauteil. Die innere Mantelfläche des hülsenförmigen Wärmeableiters kann den wärmeaufnehmenden Flächenabschnitt ausbilden und der elektrischen Leitung oder dem elektrischen Leiter zugewandt sein. Die äußere Mantelfläche des hülsenförmigen Wärmeableiters kann den wärmeabgebenden Flächenabschnitt ausbilden und von der elektrischen Leitung bzw. dem elektrischen Leiter abgewandt sein. Der hülsenförmige Wärmeableiter kann entlang seines Umfangs vollständig geschlossen sein und die elektrische Leitung oder den elektrischen Leiter umhüllen. Der hülsenförmige Wärmeableiter kann entlang seiner Längsachse aber auch geschlitzt sein, beispielsweise um die Montage auf der elektrischen Leitung bzw. auf dem elektrischen Leiter zu vereinfachen und/oder um durch den Schlitz optional einen Kanal zu dem elektrischen Leiter bereitzustellen, beispielsweise um weitere Wärmeableiter nach außen zu führen. Die axiale Länge des hülsenförmigen Wärmeableiters kann der axialen Länge der elektrischen Leitung bzw. des elektrischen Leiters entsprechen, vorzugsweise ist der Wärmeableiter allerdings kürzer ausgebildet, wobei dann mehrere hülsenförmige Wärmeableiter entlang der Längsachse der elektrischen Leitung verteilt (insbesondere axial beabstandet) angeordnet sein können. Der hülsenförmige Wärmeableiter kann auf seiner von der elektrischen Leitung abgewandten äußeren Mantelfläche optional eine oder mehrere Kühlrippen oder sonstige die Wärmeabgabe verbessernde Strukturen aufweisen.

Der Wärmeableiter kann insbesondere auch mehrere voneinander unabhängige wärmeabgebende Flächenabschnitte oder wärmeaufnehmende Flächenabschnitte aufweisen (in der Art von Inseln auf den Hauptseitenflächen verteilt).

Insbesondere kann vorgesehen sein, dass der Wärmeableiter verschiedene Funktionsbereiche in verschiedenen Kombinationen aufweist. In einem ersten Funktionsbereich kann auf beiden voneinander abgewandten Hauptflächen des Wärmeableiters jeweils einer der wärmeaufnehmenden Flächenabschnitte ausgebildet sein. In einem zweiten Funktionsbereich kann auf beiden voneinander abgewandten Hauptflächen des Wärmeableiters jeweils einer der wärmeabgebenden Flächenabschnitte ausgebildet sein. In einem dritten Funktionsbereich kann auf einer der beiden Hauptflächen einer der wärmeaufnehmenden Flächenabschnitte und auf der anderen Hauptfläche einer der wärmeabgebenden Flächenabschnitte vorgesehen sein. Vorzugsweise gehen zumindest zwei verschiedene Funktionsbereiche entlang der Quererstreckung des Wärmeableiters ineinander über. Beispielsweise können zumindest zwei verschiedene Funktionsbereiche zwischen der ersten Quererstreckung und der zweiten Quererstreckung des Wärmeableiters angeordnet sein.

In einer vorteilhaften Weiterbildung der Erfindung kann vorgesehen sein, dass der wärmeaufnehmende Flächenabschnitt und der wärmeabgebende Flächenabschnitt derart zueinander angeordnet sind, dass ein sich zwischen den Flächenabschnitten ausbildender Wärmepfad, entlang dem die Abwärme des elektrischen Leiters abgeführt wird, winklig, vorzugsweise rechtwinklig, zu der Längsachse verläuft.

Die Abwärme kann somit vorteilhaft quer zur Stromflussrichtung entlang eines Wärmepfades, vorzugsweise entlang mehrere Wärmepfade, abführbar sein.

Vorzugsweise kann vorgesehen sein, dass der wärmeaufnehmende Flächenabschnitt zumindest im Wesentlichen planparallel zu einer Außenfläche des elektrischen Leiters verläuft, insbesondere bei einem Flachleiter. Bei einem runden Leiter kann der wärmeaufnehmende Flächenabschnitt vorzugsweise konzentrisch bzw. koaxial zu dem elektrischen Leiter angeordnet sein.

Auf diese Weise kann eine besonders vorteilhafte Wärmeaufnahme bzw. Wärmeübertragung zwischen elektrischem Leiter und wärmeaufnehmendem Flächenabschnitt stattfinden.

Vorzugsweise sind der wärmeaufnehmende Flächenabschnitt und zumindest eine der Außenflächen des elektrischen Leiters einander gegenüberliegend angeordnet.

Es kann vorgesehen sein, dass der wärmeaufnehmende Flächenabschnitt dem Verlauf der Außenfläche des elektrischen Leiters zumindest abschnittsweise folgt (z. B. umlaufend um den elektrischen Leiter). Der wärmeaufnehmende Flächenabschnitt kann optional um den elektrischen Leiter umgeschlagen sein, so dass der wärmeaufnehmende Flächenabschnitt an mehrere Außenflächen bzw. Seitenflächen des elektrischen Leiters angrenzt, beispielsweise an zwei benachbarte Seitenflächen, drei benachbarte Seitenflächen oder vier benachbarte Seitenflächen des elektrischen Leiters.

Gemäß einer Weiterbildung der Erfindung kann vorgesehen sein, dass der Wärmeableiter eine Mehrzahl von entlang der Längsachse voneinander beabstandeten Fahnen aufweist, die den wärmeabgebenden Flächenabschnitt ausbilden, und die sich seitlichen von dem wenigstens einen wärmeaufnehmenden Flächenabschnitt abzweigen.

Es hat sich gezeigt, dass sich hierdurch Material einsparen lässt, bei gleichzeitig ausreichender Wärmeabführwirkung, insbesondere wenn die Abstände und Dimensionen der Fahnen vorab für die vorgesehene Anwendung durch entsprechende Simulationen oder Messungen bestimmt werden und insbesondere, wenn die Fahnen in regelmäßigen Abständen entlang der Längsachse vorgesehen sind.

In einer Weiterbildung der Erfindung kann vorgesehen sein, dass der wärmeaufnehmende Flächenabschnitt des Wärmeableiters zumindest im Wesentlichen innerhalb der elektrisch isolierenden Umhüllung verläuft.

Alternativ oder zusätzlich kann in einer besonders bevorzugten Variante der Erfindung vorgesehen sein, dass der wärmeaufnehmende Flächenabschnitt des Wärmeableiters zumindest im Wesentlichen innerhalb des elektrisch isolierenden Distanzelements verläuft.

Dadurch, dass der wärmeaufnehmende Flächenabschnitt zumindest im Wesentlichen, vorzugsweise vollständig, innerhalb des elektrischen Isolators verläuft, kann einerseits eine besonders gezielte Wärmeübertragung zwischen dem wenigstens einen elektrischen Leiter und dem wärmeaufnehmende Flächenabschnitt und andererseits eine mechanische Fixierung bzw. Führung des Wärmeableiters durch den Isolator bereitgestellt werden.

Der elektrische Isolator (z. B. die isolierende Umhüllung und/oder das isolierende Distanzelement) kann einen länglichen Führungskanal zur Aufnahme des wärmeaufnehmenden Flächenabschnitts aufweisen, der sich entlang der Längsachse erstreckt. Der wärmeaufnehmende Flächenabschnitt kann allerdings auch entlang der Oberfläche einer ohnehin vorhandenen Innenwandung des elektrischen Isolators verlaufen. Der wärmeaufnehmende Flächenabschnitt kann außerdem auch lediglich in den elektrischen Isolator eingebettet sein, also beispielsweise in einer Längsnut oder in einer sonstigen Ausnehmung in einer Außenfläche des elektrischen Isolators vertieft aufgenommen sein.

Grundsätzlich kann allerdings auch vorgesehen sein, dass der wärmeaufnehmende Flächenabschnitt überhaupt nicht durch den elektrischen Isolator verläuft, sondern beispielsweise nur entlang bzw. auf einer Außenfläche des elektrischen Isolators verläuft.

Der wärmeaufnehmende Flächenabschnitt kann durch beliebige formschlüssige, kraftschlüssige und/oder stoffschlüssige Techniken mit dem elektrischen Isolator verbunden bzw. an diesem befestigt sein. Der wärmeaufnehmende Flächenabschnitt muss allerdings auch nicht unbedingt an dem elektrischen Isolator befestigt sein.

In einer vorteilhaften Weiterbildung der Erfindung kann vorgesehen sein, dass der wärmeabgebende Flächenabschnitt des Wärmeableiters seitlich aus der elektrisch isolierenden Umhüllung und/oder seitlich aus dem elektrisch isolierenden Distanzelement herausgeführt ist. Der elektrische Isolator kann zum Herausführen des wärmeabgebenden Flächenabschnitts oder der wärmeabgebenden Flächenabschnitte entsprechende Längsschlitze aufweisen.

Insbesondere die vorstehend bereits genannten einzelnen Fahnen können aus dem elektrischen Isolator herausgeführt sein. Der wärmeabgebende Flächenabschnitt kann allerdings auch als zusammenhängender Abschnitt entlang der vollen Länge der elektrischen Leitung aus dem elektrischen Isolator herausgeführt sein.

In einer Weiterbildung der Erfindung kann vorgesehen sein, dass sich der wärmeaufnehmende Flächenabschnitt des Wärmeableiters entlang der Längsachse im Wesentlichen oder über die vollständige Länge des elektrischen Leiters erstreckt.

Dadurch, dass sich der wärmeaufnehmende Flächenabschnitt über die vorzugsweise vollständige Länge des elektrischen Leiters erstreckt, kann die Abwärme in entsprechend hohem Maße abgeführt werden. Insbesondere kann eine gleichmäßige Wärmeabführung entlang der Längserstreckung der elektrischen Leitung ermöglicht werden.

In einer vorteilhaften Weiterbildung der Erfindung kann vorgesehen sein, dass der wärmeabgebende Flächenabschnitt wenigstens einen Verbindungsbereich aufweist der ausgebildet ist, um den wärmeabgebenden Flächenabschnitt wärmeleitend mit einer angrenzenden Struktur, insbesondere einer Wärmesenke, zu verbinden.

Die angrenzende Struktur bzw. die Wärmesenke ist vorzugsweise nicht Teil der Leitungsanordnung. Bei der Wärmesenke oder bei der die Wärmesenke aufweisenden Struktur kann es sich beispielsweise um ein Karosserieteil eines Fahrzeugs handeln.

Bei der Wärmesenke kann es sich im Rahmen der Erfindung auch um einen Wärmespeicher handeln, der die Wärme zur späteren Verwendung speichern, bedarfsweise abgeben und/oder (vorübergehend oder dauerhaft) in eine andere Energieform umwandeln kann. Die Wärmesenke kann optional mit einem aktiven Kühlkreislauf bzw. Kühlmittelkreislauf verbunden sein, um die Wärme mittels eines Fluid und einer Strömungsmaschine zu transportieren.

Optional kann beispielsweise ein Gebläse bzw. ein Ventilator vorgesehen sein, um die Wärmeabführung von dem wärmeabgebenden Flächenabschnitt und/oder von der Wärmesenke zu verbessern, beispielsweise indem Umgebungsluft über den wärmeabgebenden Flächenabschnitt und/oder die Wärmesenke geleitet wird.

Es können auch mehrere Verbindungsbereiche vorgesehen sein und/oder der wenigstens eine Verbindungsbereich kann für eine Mehrfachverbindung zwischen dem wärmeabgebenden Flächenabschnitt und der Wärmesenke ausgebildet sein, um die Wärmeübertragung zu verbessern.

Der Verbindungsbereich kann mittels beliebiger formschlüssiger, kraftschlüssiger und/oder stoffschlüssiger Techniken mit der Wärmesenke verbindbar sein. Der Verbindungsbereich kann beispielsweise mit der Wärmesenke verschraubbar, vernietbar, verschweißbar oder verklebbar sein. Beispielsweise kann auch ein Durchsetzfügeprozess ("Clinchen") vorgesehen sein. Der Verbindungsbereich kann eine Durchgangsbohrung oder eine sonstige Ausnehmung zur Durchführung eines Befestigungselements aufweisen, beispielsweise zur Durchführung einer Schraube.

Der Verbindungsbereich und/oder der wärmeabgebende Flächenabschnitt kann einen geradlinigen Verlauf ausbilden, kann optional allerdings auch winklig ausgebildet sein und beispielsweise einen Abgangswinkel von 45° bis 135°, vorzugsweise ungefähr oder exakt 90°, aufweisen. Es können auch mehrere Winkelabschnitte vorgesehen sein. Der Verbindungsbereich und/oder der wärmeabgebende Flächenabschnitt, beispielsweise eine der vorstehend beschriebenen Fahnen, kann entsprechend umgeformt sein. Die Anbindung des Wärmeableiters an die Wärmesenke kann hierdurch flexibler sein.

Bei der Verbindung zwischen Verbindungsbereich und Wärmesenke können auch wärmeleitungsfördernde Mittel vorgesehen sein, wie beispielsweise eine Wärmeleitpaste, die zwischen den Verbindungsbereich und die Wärmesenke eingebracht wird. Auch Wärmeleitpads oder ein Wärmeleitklebstoff können sich gegebenenfalls gut eignen.

In einer vorteilhaften Weiterbildung der Erfindung kann vorgesehen sein, dass der wärmeabgebende Flächenabschnitt Kühlrippen ausbildet.

Durch die Kühlrippen kann die Oberfläche des Wärmeableiters im Bereich des wärmeabgebenden Flächenabschnitts vergrößert sein, um die Wärmeübertragung an die Umgebung (z. B. die Umgebungsluft oder ein spezielles Kühlfluid bzw. Kühlmittel) und/oder an die Wärmesenke zu verbessern, insbesondere mittels erhöhter Wärmeabstrahlung und Wärmekonvektion.

In einer vorteilhaften Weiterbildung der Erfindung kann außerdem vorgesehen sein, dass der wärmeabgebende Flächenabschnitt eine Wärmeemissionsschicht aufweist, mit einem größeren Emissionsgrad als der Emissionsgrad des Materials des Wärmeableiters selbst.

Bei der Wärmeemissionsschicht kann es sich vorzugsweise um eine dunkle Wärmeemissionsschicht handeln, beispielsweise um einen dunklen Lack, bevorzugt einen schwarzen Lack. Mittels der Wärmeemissionsschicht kann die Wärmeabstrahlung des Wärmeableiters im Bereich des wärmeabgebenden Flächenabschnitts erhöht, vorzugsweise soweit praktisch möglichst der Strahlungscharakteristik eines schwarzen Strahlers angenähert werden.

Die Wärmeemissionsschicht kann mittels diverser Beschichtungstechniken auf den Wärmeableiter aufgetragen werden (z. B. durch Malen/Lackieren/Tauchen/Galvanisieren/Spritzen/Pulverbeschichten etc.). Grundsätzlich können sich allerdings auch andere Befestigungstechniken eignen, wie zum Beispiel ein Aufkleben der Wärmeemissionsschicht.

Es kann vorgesehen sein, den wärmeabgebenden Flächenabschnitt mit der Wärmeemissionsschicht vorzugsweise parallel zu der angrenzenden Struktur, insbesondere der Wärmesenke, anzuordnen, um eine möglichst optimale Emission der von dem Wärmeableiter abgestrahlten Wärme an die angrenzende Struktur, beispielsweise eine Karosseriefläche eines Fahrzeugs, zu erzielen.

Durch die genannten Maßnahmen kann die Wärmeableitung von dem wärmeabgebenden Flächenabschnitt verbessert werden. Grundsätzlich können beliebige Maßnahmen und Mittel zur Verbesserung der Wärmeleitung und/oder Wärmeabstrahlung des wärmeabgebenden Flächenabschnitts vorgesehen sein.

Grundsätzlich kann die Leitungsanordnung mittels des Wärmeableiters bzw. dessen Verbindungsbereichs auch mechanisch stabil an der angrenzenden Struktur, beispielsweise der Wärmesenke, befestigt sein. Hierzu kann es allerdings erforderlich sein, den Wärmeableiter ausreichend tragfähig zu gestalten, beispielsweise zu verstärken. Demnach ist die mechanische Befestigung der Leitungsanordnung über den Wärmeableiter in der Regel nicht bevorzugt.

Gemäß einer bevorzugten Weiterbildung kann allerdings vorgesehen sein, dass die Leitungsanordnung wenigstens ein Befestigungsmittel zur mechanischen Befestigung der elektrischen Leitung an der angrenzenden Struktur, beispielsweise der Wärmesenke, aufweist.

Das wenigstens eine Befestigungsmittel kann beispielsweise als Stütze, Träger, Stelze oder sonstiges Mittel für eine mechanisch ausreichend stabile Befestigung der Leitungsanordnung an der Struktur ausgebildet sein. Es kann auch vorgesehen sein, die Leitungsanordnung bzw. die elektrische Leitung mittels Kabelbindern oder sonstigen Zurr- und/oder Befestigungsmitteln an der angrenzenden Struktur zu befestigen.

Wie bereits erwähnt kann die Leitungsanordnung bzw. können die elektrische Leitung und/oder der Wärmeableiter (zerstörungsfrei) biegbar oder starr ausgebildet sein. Vorzugsweise ist die Leitungsanordnung bzw. die elektrische Leitung und/oder der Wärmeableiter zumindest um eine in Quererstreckung des Wärmeableiters ausgerichtete Biegeachse biegbar - also um die flache Seite biegbar. Auch eine Biegung um eine Biegeachse, die orthogonal zu einer der Hauptseitenflächen des Wärmeableiters verläuft, ist grundsätzlich möglich, beispielsweise indem der elektrische Leiter und/oder der passive Wärmeableiter im Bereich des Außenradius geschlitzt ist. Um die Leitungsanordnung flexibel zu verlegen, kann auch eine bereichsweise Tordierung bzw. Verdrehung vorgesehen sein.

Die Erfindung betrifft auch eine Verbindungsanordnung, aufweisend zumindest einen elektrischen Verbinder (vorzugsweise zwei elektrische Verbinder) zur elektrischen Verbindung mit einer jeweiligen elektrischen Einrichtung, sowie eine Leitungsanordnung gemäß den vorstehenden und nachfolgenden Ausführungen. Die elektrischen Verbinder sind jeweils mit dem wenigstens einen elektrischen Leiter der Leitungsanordnung elektrisch verbunden.

Durch die vorgeschlagene passive Wärmeableitung kann eine besonders einfache und kostengünstig herstellbare Verbindungsanordnung bereitgestellt werden, insbesondere wenn der passive Wärmeableiter in der Art eines Kühlbleches ausgebildet ist.

Vorzugsweise sind die elektrischen Verbinder entlang der Längsachse voneinander beabstandet, besonders bevorzugt an gegenüberliegenden Enden der Leitungsanordnung angeordnet.

Bei einem elektrischen Verbinder kann es sich um einen Steckverbinder handeln. Ein elektrischer Steckverbinder dient bekanntermaßen dazu, elektrische Versorgungssignale und/oder Datensignale an korrespondierende Gegensteckverbinder zu übertragen. Bei einem Steckverbinder bzw. Gegensteckverbinder kann es sich um einen Stecker, einen Leiterplattenstecker, einen Einbaustecker, eine Buchse, eine Kupplung oder einen Adapter handeln. Die im Rahmen der Erfindung verwendete Bezeichnung "Steckverbinder" bzw. "Gegensteckverbinder" steht stellvertretend für alle Varianten. Ein Steckverbinder, also insbesondere eine lösbare, steckbare Verbindung ist allerdings nicht unbedingt erforderlich. Die elektrischen Verbinder können zur beliebigen (optional dauerhaften) formschlüssigen, kraftschlüssigen und/oder stoffschlüssigen Verbindung ausgebildet sein. Einer, beide bzw. alle Verbinder können gegebenenfalls auch vollständig entfallen.

Die Erfindung betrifft auch ein Energieübertragungssystem, aufweisend die Verbindungsanordnung gemäß den vorstehenden und nachfolgenden Ausführungen. Es ist vorgesehen, dass die erste der beiden elektrischen Einrichtungen als primäre elektrische Energiequelle ausgebildet ist (vorzugsweise als Akkumulator, Akkumulatorverbund oder Ladeeinrichtung zum Aufladen von Akkumulatoren). Die zweite der beiden elektrischen Einrichtungen ist als elektrischer Verbraucher (vorzugsweise als Elektromotor, beispielsweise als Elektromotor eines Elektrofahrzeugs) oder als sekundäre Energiequelle (vorzugsweise als Akkumulator oder Akkumulatorverbund) ausgebildet.

Bevorzugt kann die Erfindung in einem Ladepfad eingesetzt werden, also um elektrische Energie ausgehend von einer Ladeeinrichtung in einen Akkumulator oder einen Akkumulatorverbund zu übertragen. Auch andere Anwendungen sind allerdings vorteilhaft möglich, beispielsweise zur Übertragung elektrischer Energie eines Akkumulators oder Akkumulatorverbundes zu einem Verbraucher, insbesondere zu einem Elektromotor.

An dieser Stelle sei erwähnt, dass unter dem Begriff "Akkumulator" im Rahmen der Erfindung eine einzelne Akkumulatorzelle (auch Sekundärzelle genannt) als auch ein zusammengeschaltetes Paket mit mehreren Akkumulatorzellen gemeint sein kann (auch "Akkupack" genannt).

Bei einer primären oder sekundären elektrischen Energiequelle kann es sich auch um einen Speicher für elektrische Energie handeln, der nicht oder nicht ausschließlich elektrochemisch aufgebaut ist, zum Beispiel um einen Kondensator.

Es kann sich außerdem auch um einen nicht wiederaufladbaren Speicher für elektrische Energie handeln, zum Beispiel um eine Batterie bzw. um ein Batteriepack. Besonders vorteilhaft eignet sich die Erfindung zur Übertragung hoher elektrischer Ströme (z. B. bis zu 100 Ampere, bis zu 200 Ampere, bis zu 300 Ampere, bis zu 400 Ampere, bis zu 500 Ampere, bis zu 600 Ampere, bis zu 2.000 Ampere oder mehr) bei vorzugsweise hohen elektrischen Spannungen (z. B. bis zu 500 Volt, bis zu 600 Volt, bis zu 700 Volt, bis zu 800 Volt, bis zu 900 Volt, bis zu 1.000 Volt, bis zu 1.100 Volt, bis zu 1.500 Volt, bis zu 2.000 Volt oder mehr), beispielsweise in der Fahrzeugtechnik, besonders bevorzugt im Bereich der Elektromobilität.

Die Erfindung betrifft auch ein Fahrzeug (vorzugsweise ein Elektrofahrzeug), aufweisend eine Verbindungsanordnung und/oder ein Energieübertragungssystem gemäß den vorstehenden und nachfolgenden Ausführungen. Der Begriff "Fahrzeug" beschreibt dabei jegliches Fortbewegungsmittel, insbesondere Fahrzeuge zu Lande, zu Wasser oder in der Luft, eingeschlossen auch Raumfahrzeuge.

Merkmale, die im Zusammenhang mit einem der Gegenstände der Erfindung, namentlich gegeben durch die erfindungsgemäße Leitungsanordnung, die Verbindungsanordnung, das Energieübertragungssystem oder das Fahrzeug beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch eine von Anspruch 1 unabhängige Leitungsanordnung, umfassend eine elektrische Leitung und einen Wärmeableiter, der zumindest abschnittsweise entlang einer Längsachse der elektrischen Leitung verläuft, und der zumindest soweit an die elektrische Leitung angenähert ist, dass der Wärmeableiter Abwärme der elektrischen Leitung abzuführen vermag. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser Leitungsanordnung.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: ein erstes Ausführungsbeispiel einer Leitungsanordnung mit einer elektrischen Leitung und einem mit einer Wärmesenke verbundenen Wärmeableiter in einer perspektivischen Darstellung;
- Figur 2: die Leitungsanordnung der Figur 1 in einer stirnseitigen Darstellung;
- Figur 3: ein zweites Ausführungsbeispiel einer Leitungsanordnung mit einer elektrischen Leitung und einem mit einer Wärmesenke verbundenen Wärmeableiter in einer perspektivischen Darstellung;
- Figur 4: die Leitungsanordnung der Figur 3 in einer stirnseitigen Darstellung;
- Figur 5: ein drittes Ausführungsbeispiel einer Leitungsanordnung mit einer elektrischen Leitung und einem mit einer Wärmesenke verbundenen Wärmeableiter in einer stirnseitigen Darstellung;
- Figur 6: ein viertes Ausführungsbeispiel einer Leitungsanordnung mit einer elektrischen Leitung und einem mit einer Wärmesenke verbundenen Wärmeableiter in einer perspektivischen Darstellung;
- Figur 7: die Leitungsanordnung der Figur 6 in einer stirnseitigen Darstellung;
- Figur 8: ein fünftes Ausführungsbeispiel einer Leitungsanordnung mit einer elektrischen Leitung und einem mit einer Wärmesenke verbundenen Wärmeableiter in einer stirnseitigen Darstellung;
- Figur 9: ein sechstes Ausführungsbeispiel einer Leitungsanordnung mit einer elektrischen Leitung und einem mit einer Wärmesenke verbundenen Wärmeableiter in einer stirnseitigen Darstellung;
- Figur 10: ein siebtes Ausführungsbeispiel einer Leitungsanordnung mit einer elektrischen Leitung und einem mit einer Wärmesenke verbundenen Wärmeableiter in einer perspektivischen Darstellung;
- Figur 11: die Leitungsanordnung der Figur 10 in einer stirnseitigen Darstellung;
- Figur 12: ein achtes Ausführungsbeispiel einer Leitungsanordnung mit einer elektrischen Leitung und einem mit einer Wärmesenke verbundenen Wärmeableiter in einer stirnseitigen Darstellung;
- Figur 13: ein neuntes Ausführungsbeispiel einer Leitungsanordnung mit einer elektrischen Leitung und einem mit einer Wärmesenke verbundenen Wärmeableiter in einer stirnseitigen Darstellung;
- Figur 14: ein erfindungsgemäßes Energieübertragungssystem mit zwei elektrischen Einrichtungen und einer die elektrischen Einrichtungen miteinander verbindenden Verbindungsanordnung; und
- Figur 15: eine grafische Darstellung der Temperaturverteilung innerhalb einer Leiteranordnung in Abhängigkeit des Mitte-zu-Mitte-Abstands zwischen einzelnen wärmeabgebenden Fahnen.

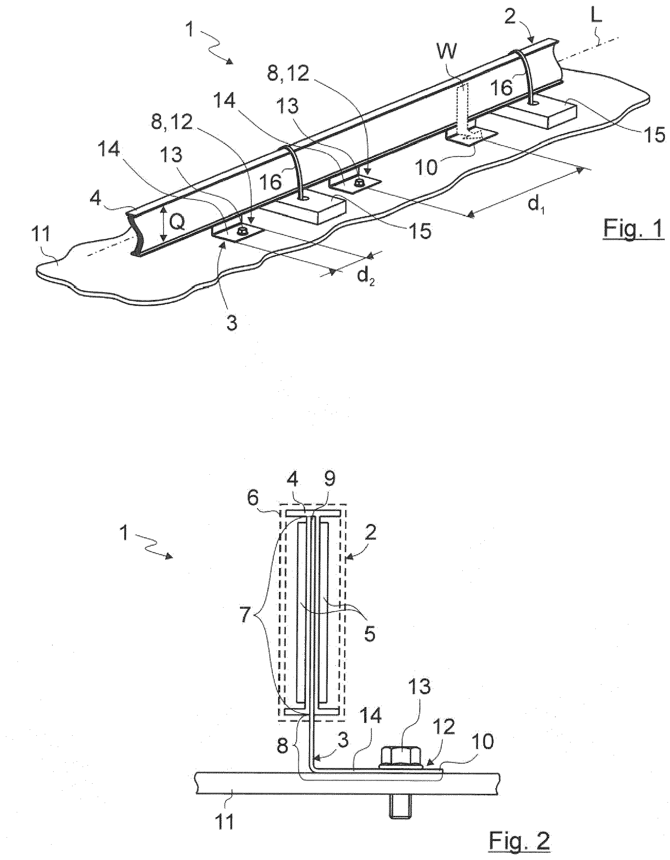

Die Figuren 1 bis 13 zeigen beispielhaft verschiedene Ausführungsformen einer erfindungsgemäßen Leitungsanordnung 1. Jede der beispielhaften Leitungsanordnungen 1 umfasst eine elektrische Leitung 2 und einen passiven Wärmeableiter 3.

In den Figuren 1 und 2 ist ein erstes Ausführungsbeispiel der Leitungsanordnung 1 gezeigt. Figur 1 zeigt eine perspektivische und Figur 2 eine stirnseitige Darstellung. Die elektrische Leitung 2 umfasst einen als elektrisch isolierendes Distanzelement 4 ausgebildeten elektrischen Isolator, an dem zwei elektrische Leiter 5 anliegend verlaufen, die sich entlang der Längsachse L der elektrischen Leitung 2 erstrecken. Das isolierende Distanzelement 4 beabstandet die beiden Leiter 5 voneinander, um einen Kurzschluss zwischen den Leitern 5 zu vermeiden (vgl. insbesondere Figur 2).

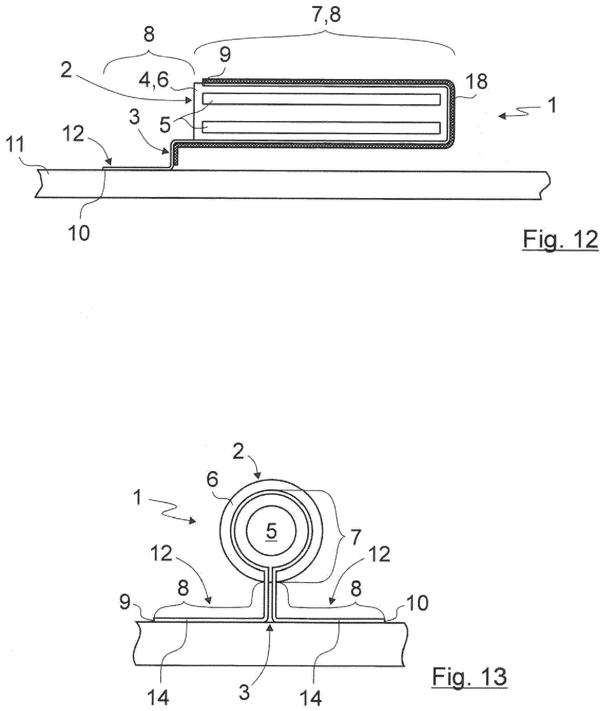

Die elektrischen Leiter 5 sind als längliche Flachleiter mit einem flachen Querschnitt ausgebildet. Grundsätzlich kann allerdings ein beliebiger Querschnitt vorgesehen sein, beispielsweise auch der nachfolgend in Figur 13 dargestellte, runde Querschnitt, außerdem beispielsweise ein quadratischer Querschnitt, ein ovaler Querschnitt oder ein kammförmiger Querschnitt. Auch die Anzahl der elektrischen Leiter 5 der elektrischen Leitung 2 kann grundsätzlich beliebig sein, wobei in den meisten Ausführungsbeispielen zwei elektrische Leiter 5 vorgesehen sind, um einen Hin- und einen Rückleiter in einer gemeinsamen elektrischen Leitung 2 bereitzustellen. Auch genau ein elektrischer Leiter 5 oder mehr als zwei elektrische Leiter 5 können allerdings anwendungsspezifisch vorgesehen sein.

Bei Verwendung von zwei elektrischen Leitern 5, die von einem isolierenden Distanzelement 4 beabstandet sind, wie unter anderem in dem Ausführungsbeispiel der Figuren 1 und 2 dargestellt, kann optional außerdem auch ein als elektrisch isolierende Umhüllung 6 ausgebildeter elektrischer Isolator vorgesehen sein, der in Figur 2 strichliniert gezeigt ist, und der die elektrischen Leiter 5 sowie das isolierende Distanzelement 4 gemeinsam umhüllt.

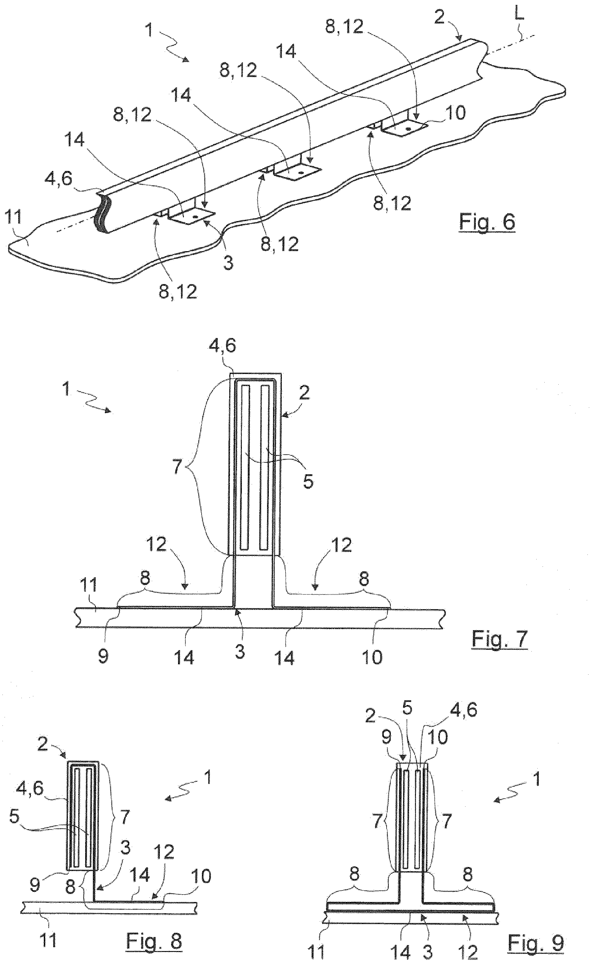

Grundsätzlich können auch noch weitere elektrische Isolatoren vorgesehen sein, beispielsweise ein jeden einzelnen elektrischen Leiter 5 umhüllender Isolator. Außerdem kann auch bereits das isolierende Distanzelement 4 ausgebildet sein, um eine vollständige Umhüllung für die elektrischen Leiter 5 bereitzustellen, wie beispielsweise in der nachfolgenden Figur 7 gezeigt.

Der vorgeschlagene passive Wärmeableiter 3 verläuft ebenfalls zumindest abschnittsweise entlang der Längsachse L der elektrischen Leitung 2. Der Wärmeableiter 3 weist wenigstens einen wärmeaufnehmenden Flächenabschnitt 7 und wenigstens einen thermisch mit dem wärmeaufnehmenden Flächenabschnitt 7 verbundenen, wärmeabgebenden Flächenabschnitt 8 auf. In den Ausführungsbeispielen ist jeweils genau ein zusammenhängender wärmeaufnehmender Flächenabschnitt 7 vorgesehen, der sich über die gesamte Längserstreckung des Wärmeableiters 3 bzw. der elektrischen Leitung 2 erstreckt, sowie mehrere einzelne wärmeabgebende Flächenabschnitte 8 (vgl. beispielsweise die Figuren 1 und 2 in Zusammenschau).

Der wärmeaufnehmende Flächenabschnitt 7 ist zumindest soweit an die elektrischen Leiter 5 angenähert, dass der wärmeaufnehmende Flächenabschnitt 7 mit den elektrischen Leitern 5 eine thermische Wirkverbindung eingeht, um Abwärme der elektrischen Leiter 5 entlang eines Wärmepfades W oder mehrerer Wärmepfade W zu dem wärmeabgebenden Flächenabschnitt 8 abzuführen. In Figur 1 ist beispielhaft einer der Wärmepfade strichliniert angedeutet.

Vorzugsweise ist der Wärmeableiter 3 einstückig ausgebildet, wie in den Ausführungsbeispielen dargestellt, wobei die wärmeaufnehmenden Flächenabschnitte 7 vorzugsweise unmittelbar in die wärmeabgebenden Flächenabschnitte 8 übergehen.

Insbesondere kann vorgesehen sein, dass der Wärmeableiter 3 aus einem flachen, länglichen Werkstoff ausgebildet ist, beispielsweise aus einem tiefgezogenen Blechwerkstoff (z. B. ein Kupferblech oder ein Aluminiumblech), und in Bezug auf die Längserstreckung bzw. die Längsachse L eine erste Längsbegrenzung und eine zweite Längsbegrenzung und in Bezug auf die Quererstreckung Q (vgl. Figur 1) des Wärmeableiters 3 eine erste Querbegrenzung 9 und eine zweite Querbegrenzung 10 aufweist. Vorzugsweise verläuft der wärmeaufnehmende Flächenabschnitt 7 außerdem zumindest im Wesentlichen planparallel zu einer Außenfläche des elektrischen Leiters 5 und/oder folgt dem Verlauf der Außenfläche des elektrischen Leiters 5 zumindest abschnittsweise. In der bevorzugten Variante erfolgt die Wärmeableitung außerdem über die volle Länge des elektrischen Leiters 5 bzw. der elektrischen Leitung 2, weshalb sich der wärmeaufnehmende Flächenabschnitt 7 bzw. der Wärmeableiter 3 über die vollständige Länge des elektrischen Leiters 5 entlang der Längsachse L erstreckt, wie bereits erwähnt.

Es ergeben sich für die Anordnung des wärmeaufnehmenden Flächenabschnitts 7 und des wärmeabgebenden Flächenabschnitts 8 auf den Hauptseitenflächen des Wärmeableiters 3 verschiedene Varianten, die in den Figuren nur auszugsweise und beispielhaft dargestellt sind. Bei allen Varianten verläuft der sich zwischen den Flächenabschnitten 7, 8 erstreckende Wärmepfad W quer bzw. winklig zu der Längsachse L und damit auch quer zur Stromflussrichtung.

In der Regel erstrecken sich der wärmeaufnehmende Flächenabschnitt 7 und der wärmeabgebende Flächenabschnitt 8 jeweils entlang der Längsachse L und spannen ihre Fläche in Querrichtung Q auf der Hauptseitenfläche oder auf den Hauptseitenflächen des Wärmeableiters 3 auf.

Beispielsweise kann sich, wie unter anderem in dem ersten Ausführungsbeispiel der Figuren 1 und 2 dargestellt, jeder der beiden Flächenabschnitte 7, 8 von einer der beiden Querbegrenzungen 9, 10 erstrecken und ausgehend von der ihm zugeordneten Querbegrenzung 9, 10 in Richtung auf den anderen Flächenabschnitt 8, 7 verlaufen. Wie in Figur 2 besonders gut erkennbar ist, ist in dem ersten Ausführungsbeispiel vorgesehen, dass sich der wärmeaufnehmende Flächenabschnitt 7 von der ersten Querbegrenzung 9 und der wärmeabgebende Flächenabschnitt 8 von der zweiten Querbegrenzung 10 des Wärmeableiters 3 erstreckt. Der wärmeaufnehmende Flächenabschnitt 7 bzw. die erste Querbegrenzung 9 des Wärmeableiters 3 verläuft im ersten Ausführungsbeispiel innerhalb des elektrisch isolierenden Distanzelements 4 (und auch innerhalb der optional vorgesehenen elektrischen isolierenden Umhüllung 6). Der wärmeaufnehmende Flächenabschnitt 7 ist hierzu in vorteilhafter Weise zwischen den beiden elektrischen Leitern 5 in einem länglichen Führungskanal des isolierenden Distanzelements 4 angeordnet. Hierdurch können eine besonders direkte Wärmeaufnahme des Wärmeableiters 3 und eine stabile Führung des Wärmeableiters 3 erfolgen.

Der Wärmeableiter 3 ist mit seinem wärmeabgebenden Flächenabschnitt 8 seitlich (in den Figuren nach "unten") aus der elektrisch isolierenden Umhüllung 6 bzw. aus dem elektrisch isolierenden Distanzelement 4 herausgeführt, beispielsweise durch entsprechende Schlitze in dem isolierenden Distanzelement 4 und/oder in der isolierenden Umhüllung.

Es ist vorgesehen, dass der Wärmeableiter 3 die über den wärmeaufnehmenden Flächenabschnitt 7 aufgenommene Abwärme der elektrischen Leiter 5 mittels des wärmeabgebenden Flächenabschnitts 8 an eine umgebende Struktur, insbesondere an eine Wärmesenke 11, und/oder an die Umgebung (z. B. die Umgebungsluft oder ein spezielles Kühlfluid) abgibt. Bei der Wärmesenke 11 kann es sich auch um einen Wärmespeicher handeln.

Der wärmeabgebende Flächenabschnitt 8 kann wenigstens einen Verbindungsbereich 12 aufweisen, der ausgebildet ist, um den wärmeabgebenden Flächenabschnitt 8 wärmeleitend mit der Wärmesenke 11 bzw. der Struktur zu verbinden. Bei der Wärmesenke 11 bzw. bei der Struktur kann es sich beispielsweise um ein Karosseriebauteil eines Fahrzeugs handeln. Die Wärmesenke 11 kann auch Teil einer aktiven Kühlung sein, bei der der Wärmeabtransport erhöht wird, indem eine Strömungsmaschine (z. B. eine Pumpe oder ein Ventilator) ein Fluid (z. B. ein Kühlfluid bzw. Kühlmittel, vorzugsweise ein flüssiges Kühlmittel, oder ein Gas, wie z. B. Umgebungsluft) angrenzend an dem wärmeabgebenden Flächenabschnitt 8 vorbeiführt. In dem ersten Ausführungsbeispiel der Figuren 1 und 2 ist der Verbindungsbereich 12 über ein als Schraube 13 ausgebildetes Befestigungselement mit der Wärmesenke 11 verbunden.

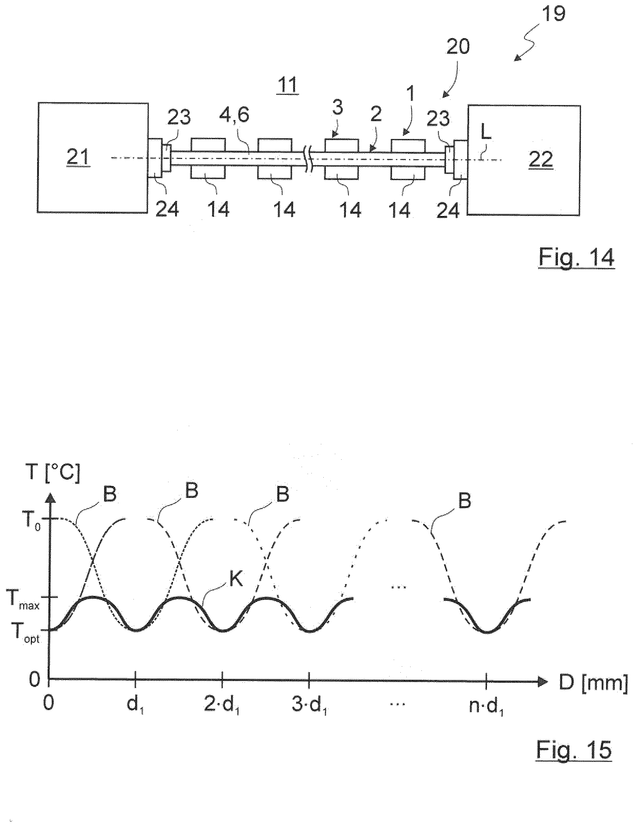

In den in den Figuren dargestellten bevorzugten Variante weist der Wärmeableiter 3 an seiner zweiten Querbegrenzung 10, ausgehend von der sich die wärmeabgebenden Flächenabschnitte 8 erstrecken, eine Mehrzahl von entlang der Längsachse L voneinander beabstandeten Fahnen 14 auf. Jede der Fahnen 14 bildet in dem ersten Ausführungsbeispiel einen jeweiligen wärmeabgebenden Flächenabschnitt 8 aus, die alle mit dem gemeinsamen wärmeaufnehmenden Flächenabschnitt 7 einstückig über die gemeinsame Hauptseitenfläche des Wärmeableiters 3 verbunden sind. Vorzugsweise sind die Fahnen 14 gleichmäßig entlang der Längsachse L verteilt, um eine gleichmäßige Wärmeabführung und somit einen zumindest im Wesentlichen konstanten Temperaturgradienten innerhalb der elektrischen Leiter 5 zu ermöglichen. Ein geeigneter Mitte-zu-Mitte-Abstand d₁ der Fahnen 14 kann anwendungsspezifisch ermittelt werden, beispielsweise anhand von Simulationen oder Messungen. Ein mögliches Verfahren zur Ermittlung eines vorteilhaften Mitte-zu-Mitte-Abstands d₁ soll nun anhand der Figur 15 vorgestellt werden. Figur 15 zeigt eine beispielhafte Temperaturverteilung innerhalb der Leitungsanordnung 1. Die Fahnen 14 sind in Vielfachen n eines beispielhaften Mitte-zu-Mitte-Abstands d₁ entlang der Längsachse L der Leitungsanordnung 1 verteilt angeordnet. Die Ausgangstemperatur To, die in der Leitungsanordnung 1 ohne den vorgeschlagenen Wärmeableiter 3 bzw. ohne die Fahnen 14 (bei einer definierten zu übertragenden elektrischen Leistung) herrschen würde, ist in dem Diagramm markiert. Jede der Fahnen 14 vermag eine jeweilige Wärmeabführung aus der Leitungsanordnung 1 bereitzustellen, die in dem Diagramm für jede Fahne 14 als jeweilige Basiskurve B angedeutet ist. Der Verlauf dieser Basiskurve B, insbesondere die Breite der Basiskurve B entlang der Längsachse L der Leitungsanordnung 1 kann beispielsweise messtechnisch durch Verwendung geeigneter Thermosensoren ermittelbar sein. Durch Modifikation des Mitte-zu-Mitte-Abstands d₁ ist es nun möglich, die Basiskurven B der einzelnen Fahnen 14 derart in Überlappung zu bringen, dass sich eine angestrebte Maximaltemperatur Tₘₐₓ, die sich in der Regel auf halbem Weg zwischen zwei Fahnen 14 ausbildet, einstellt. Dabei ergibt sich aus den Basiskurven B eine überlagerte Temperaturkurve K. Unmittelbar an den Fahnen 14 stellt sich in der Regel die niedrigste Temperatur Tₒₚₜ innerhalb der Leitungsanordnung 1 ein.

Beispielsweise kann der Mitte-zu-Mitte-Abstand d₁ 10 mm bis 500 mm, vorzugsweise 50 mm bis 300 mm, besonders bevorzugt 100 mm bis 250 mm, noch weiter bevorzugt 150 mm bis 200 mm betragen. An dieser Stelle sei nochmals erwähnt, dass alternativ zu der Verwendung von einzelnen Fahnen 14 auch ein durchgängiger wärmeabgebender Flächenabschnitt 8 aus der Leitungsanordnung 1 herausgeführt sein kann.

Die Wärmeableitung hängt auch von der Größe des wärmeabgebenden Flächenabschnitts 8 ab, also insbesondere auch von der Erstreckung einzelnen Fahnen 14 entlang der Längsachse L. Die Längserstreckung d₂ einer Fahne 14 kann grundsätzlich beliebig sein und ebenfalls anwendungsspezifisch anhand von Simulationen oder Messungen ermittelt werden. Beispielsweise kann die Längserstreckung d₂ einer Fahne 14 5 mm bis 100 mm, vorzugsweise 10 mm bis 80 mm, besonders bevorzugt 30 mm bis 70 mm, noch weiter bevorzugt ungefähr 50 mm betragen.

Optional kann der Wärmeableiter 3 bzw. der wärmeabgebende Flächenabschnitt 8 bzw. der Verbindungsbereich 12 auch zur Befestigung der Leitungsanordnung 1 an der angrenzenden Struktur bzw. der Wärmesenke 11 dienen. Vorzugsweise erfolgt die mechanische Befestigung allerdings über separate Befestigungsmittel. In Figur 1 ist beispielhaft eine derartige Befestigung, zusätzlich zu der Verschraubung des Verbindungsbereichs 12 an der Wärmesenke 11, dargestellt. Die Wärmesenke 11 weist beispielsweise Stützelemente 15 auf (nicht unbedingt erforderlich). Für jedes Stützelement 15 ist ein als Kabelbinder 16 ausgebildetes Befestigungsmittel vorgesehen, um die Leitungsanordnung 1 an der Struktur bzw. an der Wärmesenke 11 zu verzurren. Grundsätzlich können beliebige Befestigungsmittel vorgesehen sein, um eine formschlüssige, kraftschlüssige und/oder stoffschlüssige Befestigung zu ermöglichen.

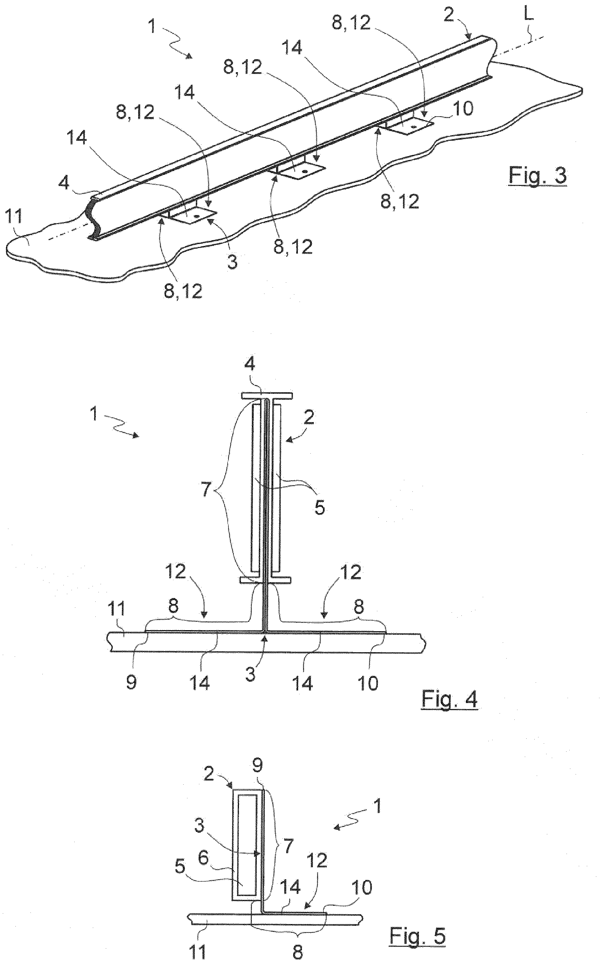

In den Figuren 3 und 4 ist ein zweites Ausführungsbeispiel einer erfindungsgemäßen Leitungsanordnung 1 dargestellt. Das zweite Ausführungsbeispiel entspricht im Wesentlichen dem ersten Ausführungsbeispiel, weist allerdings insbesondere eine abweichende Anordnung des wärmeaufnehmenden Flächenabschnitts 7 und der wärmeabgebenden Flächenabschnitte 8 auf.

Gemäß dem zweiten Ausführungsbeispiel ist der wärmeaufnehmende Flächenabschnitt 7 in einem Mittelabschnitt zwischen den beiden Querbegrenzungen 9, 10 des Wärmeableiters 3 ausgebildet, wobei sich ausgehend von beiden Querbegrenzungen 9, 10 jeweils ein wärmeabgebender Flächenabschnitt 8 erstreckt, die wiederum an Fahnen 14 ausgebildet sind (vgl. insbesondere Figur 3). Der Wärmeableiter 3 ist somit T-förmig geformt und mit seinem den wärmeaufnehmenden Flächenabschnitt 7 aufweisenden Mittelabschnitt innerhalb des elektrisch isolierenden Distanzelements 4 angeordnet. Die Wärmeableitung über die wärmeabgebenden Flächenabschnitte 8 kann aufgrund der vergrößerten bzw. gegenüber dem ersten Ausführungsbeispiel verdoppelten Oberfläche verbessert sein. Aufgrund der Symmetrie können sich gegebenenfalls auch elektrische Vorteile aus einer derartigen Anordnung ergeben.

Ferner ist in dem zweiten Ausführungsbeispiel der Figuren 3 und 4 sowie in den weiteren Ausführungsbeispielen keine Verschraubung des Verbindungsbereichs 12 mit der Wärmesenke 11 vorgesehen. Alternativ kann beispielsweise eine Nietverbindung, eine Clinchverbindung oder stoffschlüssige Verbindung (z. B. eine Klebeverbindung) vorgesehen sein.

Auch in dem Ausführungsbeispiel der Figuren 3 und 4 kann außerdem eine in der Zeichnung nicht dargestellte elektrisch isolierende Umhüllung 6 vorgesehen sein.

Ein drittes Ausführungsbeispiel ist in Figur 5 dargestellt. Beispielhaft weist die elektrische Leitung 2 der Figur 5 lediglich einen einzigen elektrischen Leiter 5 auf, der unmittelbar von einer elektrisch isolierenden Umhüllung 6 umgeben ist. Wie in Figur 5 dargestellt, kann der wärmeaufnehmende Flächenabschnitt 7 optional auch außerhalb des elektrischen Isolators bzw. der elektrisch isolierenden Umhüllung 6 ausgebildet und vorzugsweise mechanisch an der isolierenden Umhüllung 6 befestigt sein, beispielsweise verklebt sein. Auf diese Weise kann Abwärme von dem elektrischen Leiter 5 aufgenommen werden. Um die Wärmeabführung bei dem dritten Ausführungsbeispiel noch zu erhöhen, könnte der Wärmeableiter 3 bzw. der wärmeaufnehmende Flächenabschnitt 7 optional um zumindest eine, vorzugsweise zwei oder drei, weitere Seitenflächen des elektrischen Leiters 5 bzw. der elektrisch isolierenden Umhüllung 6 umgeschlagen sein. Ein außerhalb des elektrischen Isolators 4, 6 angeordneter wärmeaufnehmender Flächenabschnitt 7 ist in der Regel allerdings nicht unbedingt bevorzugt.

Die Figuren 6 und 7 zeigen ein viertes Ausführungsbeispiel, das grundsätzlich den vorangegangenen Ausführungsbeispielen ähnelt. Die elektrische Leitung 2 weist zwei elektrische Leiter 5 auf, die von einem gemeinsamen elektrischen Isolator umhüllt sind, der gleichzeitig die Funktion der isolierenden Umhüllung 6 und eines isolierenden Distanzelements 4 erfüllt.

Vergleichbar mit dem Ausführungsbeispiel der Figuren 3 und 4 ist der wärmeaufnehmende Flächenabschnitt 7 in einem Mittelabschnitt des Wärmeableiters 3 angeordnet. Ausgehend von beiden Querbegrenzungen 9, 10 erstrecken sich jeweils wärmeabgebende Flächenabschnitte 8 an jeweiligen Fahnen 14. Der wärmeaufnehmende Flächenabschnitt 7 ist innerhalb des elektrischen Isolators 4, 6 verlaufend angeordnet.

Eine Variante des vierten Ausführungsbeispiels ist in Figur 8 als fünftes Ausführungsbeispiel dargestellt. Dabei erstreckt sich wiederum ausgehend von jeder Querbegrenzung 9, 10 ein jeweiliger Flächenabschnitt 7, 8 - anders ausgedrückt entfällt einer der beiden "Füße" des dritten Ausführungsbeispiels.

Ein sechstes Ausführungsbeispiel ist in Figur 9 gezeigt. Wie dargestellt, kann auch vorgesehen sein, dass der wärmeabgebende Flächenabschnitt 8 in dem Mittelabschnitt bzw. zwischen den beiden Querbegrenzungen 9, 10 vorgesehen ist, wobei ausgehend von beiden Querbegrenzungen 9, 10 ein jeweiliger wärmeaufnehmender Flächenabschnitt 7 verläuft.

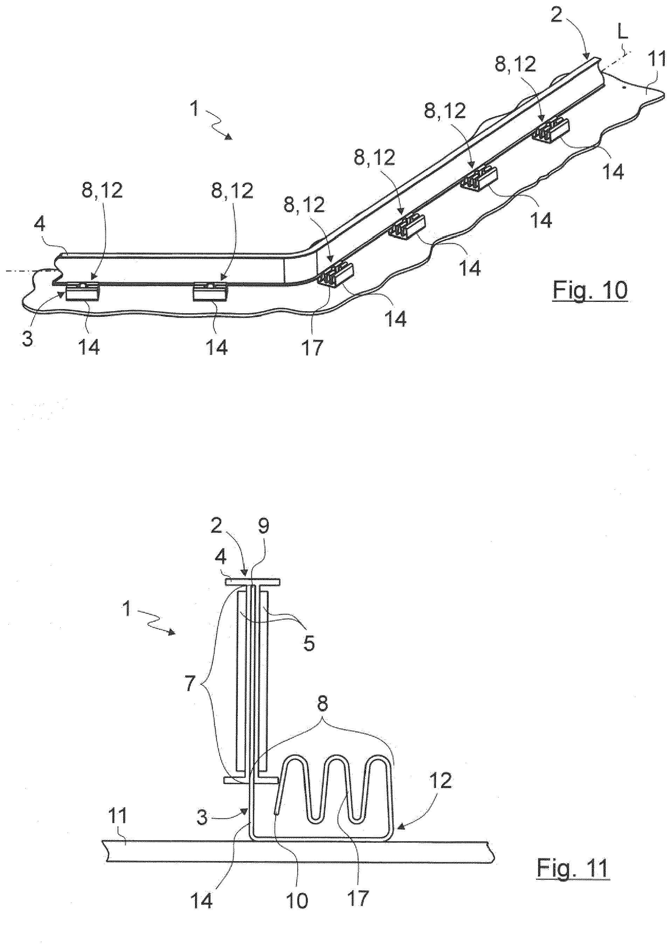

Die Figuren 10 und 11 zeigen ein siebtes Ausführungsbeispiel der Erfindung. Um die Wärmeabgabe des wärmeabgebenden Flächenabschnitts 8 zu verbessern, weisen die wärmeabgebenden Flächenabschnitte 8 bzw. weisen die Fahnen 14 eine Kühlrippenstruktur aus mehreren Kühlrippen 17 auf. Hierdurch können die Wärmekonvektion und Wärmeabstrahlung erhöht werden. Alle Ausführungsbeispiele können optional eine Kühlrippenstruktur aufweisen.

Wie sich anhand von Figur 10 ebenfalls gut erkennen lässt, kann auch vorgesehen sein, dass die Leitungsanordnung 1 kurvige Abschnitte aufweist und damit vergleichsweise flexibel entlang oder auf der Struktur bzw. auf der Wärmesenke 11 verlegbar ist.

Figur 12 soll anhand eines achten Ausführungsbeispiels der Erfindung eine weitere Möglichkeit zur Steigerung der Wärmeabgabe des wärmeabgebenden Flächenabschnitts 8 verdeutlichen. Es kann vorgesehen sein, dass der wärmeabgebende Flächenabschnitt 8 eine Wärmeemissionsschicht 18 aufweist, also beispielsweise mit einer Wärmeemissionsschicht 18 beschichtet ist, die einen größeren Emissionsgrad aufweist als der Emissionsgrad des Materials des Wärmeableiters 3. Beispielsweise kann ein dunkler Lack vorgesehen sein, wodurch die Wärmeabstrahlung verstärkt werden kann. Alle Ausführungsbeispiele können optional eine Wärmeemissionsschicht 18 aufweisen.

Wie vorstehend bereits in Bezug auf das Ausführungsbeispiel der Figur 5 vorgeschlagen, ist der Wärmeableiter 3 um mehrere Seitenflächen der elektrischen Leitung 2 umgeschlagen, um die Wärmeaufnahme von den elektrischen Leitern 5 zu erhöhen. Der Wärmeableiter 3 ist dabei zumindest teilweise in die Außenfläche des elektrischen Isolators 4, 6 eingelassen. Der wärmeaufnehmende Flächenabschnitt 7 ist in dem Bereich, in dem der Wärmeableiter 3 mit der elektrischen Leitung 2 verbunden ist, auf der der elektrischen Leitung 2 zugewandten Hauptseitenfläche des elektrischen Leiters 5 angeordnet. Auf der hiervor abgewandten, zweiten Hauptseitenfläche des Wärmeableiters 3 ist der wärmeabgebende Flächenabschnitt 8 angeordnet, der die innenseitig aufgenommene Wärme nach außen abzustrahlen vermag. Ergänzend wird außerdem über einen weiteren wärmeabgebenden Flächenabschnitt 8 die Abwärme über den Verbindungsbereich 12 auch direkt an die Wärmesenke 11 abgegeben.

Außerdem soll das Ausführungsbeispiel der Figur 12 verdeutlichen, dass der wärmeabgebende Flächenabschnitt 8 bzw. der Verbindungsbereich 12 einen diversen Verlauf ausbilden kann bzw. nahezu beliebig umgeformt sein kann, um verschiedene Ausrichtungen der Leitungsanordnung 1 relativ zu der angrenzenden Struktur bzw. der Wärmesenke 11 zu ermöglichen.

Ein weiteres Ausführungsbeispiel einer Leitungsanordnung 1 ist in Figur 13 gezeigt. Figur 13 soll insbesondere verdeutlichen, dass sich die Erfindung zur Verwendung mit beliebigen Querschnitten des oder der elektrischen Leiter 5 eignen kann, beispielsweise also auch zur Verwendung mit einem elektrischen Leiter 5 mit einem runden Querschnitt, wie dargestellt. Die elektrische Leitung 2 in Figur 13 ist in der Art eines elektrischen Kabels aufgebaut und weist neben dem elektrischen Leiter 5 eine den elektrischen Leiter 5 einhüllende isolierende Umhüllung 6 auf, in der Art eines Kabelmantels. Der wärmeaufnehmende Flächenabschnitt 7 ist in einem Mittelabschnitt des Wärmeableiters 3 vorgesehen und verläuft innerhalb der elektrisch isolierenden Umhüllung 6. Im Bereich der beiden Querbegrenzungen 9, 10 des Wärmeableiters 3 sind zwei wärmeabgebende Flächenabschnitte 8 vorgesehen.

Die vorstehend beschriebenen Leitungsanordnungen 1 eignen sich grundsätzlich für beliebige Anwendungen in der Elektrotechnik, sind aber insbesondere für die Nachrichtentechnik und ganz besonders für die Hochvolttechnik von Vorteil. Beispielhaft ist in Figur 14 ein Energieübertragungssystem 19 dargestellt.

Das Energieübertragungssystem 19 weist eine Verbindungsanordnung 20 auf, um eine erste elektrische Einrichtung 21 und eine zweite elektrische Einrichtung 22 elektrisch miteinander zu verbinden (grundsätzlich können mittels der Verbindungsanordnung 20 bzw. der Leitungsanordnung 1 auch mehr als zwei elektrische Einrichtungen 21, 22 miteinander verbunden werden).

Die Verbindungsanordnung 20 weist die Leitungsanordnung 1 auf, die optional an einem oder an beiden Enden jeweilige elektrische Verbinder 23 aufweisen kann (beispielsweise, aber nicht notwendigerweise, Steckverbinder). Die elektrischen Verbinder 23 können mit dem elektrischen Leiter 5 der Leitungsanordnung 1 elektrisch verbunden sein und vorzugsweise, wie dargestellt, an sich entlang der Längsachse L der Leitungsanordnung 1 bzw. der elektrischen Leitung 2 gegenüberliegenden Enden der Leitungsanordnung 1 angeordnet sein. Zur Verbindung mit der jeweiligen elektrischen Einrichtung 21, 22 können die elektrischen Einrichtungen 21, 22 Gegenverbinder 24 aufweisen (beispielsweise, aber nicht notwendigerweise, Gegensteckverbinder). Grundsätzlich kann die Leitungsanordnung 1 bzw. können die elektrischen Leiter 5 der elektrischen Leitung 2 der Leitungsanordnung 1 auch unmittelbar an den elektrischen Einrichtungen 21, 22 angebunden sein.

Vorzugsweise ist eine der beiden elektrischen Einrichtungen 21, 22 des Energieübertragungssystems 19 als primäre elektrische Energiequelle ausgebildet (beispielsweise als Akkumulator, Akkumulatorverbund oder Ladeeinrichtung zum Aufladen von Akkumulatoren). Die andere elektrische Einrichtung 22, 21 kann dann vorzugsweise als elektrischer Verbraucher (beispielsweise Elektromotor) oder als sekundäre Energiequelle (beispielsweise als Akkumulator oder Akkumulatorverbund) ausgebildet sein.

Besonders bevorzugt ist eine der elektrischen Einrichtungen 21, 22 als Ladeeinrichtung und die andere elektrische Einrichtung 22, 21 als Akkumulator oder Akkumulatorverbund ausgebildet, um mittels der Leitungsanordnung 1 eine Ladeeinrichtung mit einem Akkumulator bzw. Akkumulatorverbund zu verbinden, insbesondere bei Elektrofahrzeugen.

Eine weitere besonders vorteilhafte Anwendung kann die Energieübertragung von einem Akkumulator bzw. Akkumulatorverbund zu einem elektrischen Verbraucher, insbesondere Elektromotor eines Elektrofahrzeugs, sein. Wie bereits erwähnt, können allerdings grundsätzlich beliebige Anwendungen vorgesehen sein.

## Patentansprüche

1. Leitungsanordnung (1), umfassend eine elektrische Leitung (2), die wenigstens einen elektrischen Isolator (4, 6) und wenigstens einen elektrischen Leiter (5) aufweist, der zumindest abschnittsweise anliegend an den elektrischen Isolator (4, 6) entlang einer Längsachse (L) der elektrischen Leitung (2) verläuft,
**gekennzeichnet durch**
einen passiven Wärmeableiter (3), der zumindest abschnittsweise entlang der Längsachse (L) verläuft, und der wenigstens einen wärmeaufnehmenden Flächenabschnitt (7) und wenigstens einen thermisch mit dem wärmeaufnehmenden Flächenabschnitt (7) verbundenen wärmeabgebenden Flächenabschnitt (8) aufweist, wobei der wärmeaufnehmende Flächenabschnitt (7) zumindest soweit an den elektrischen Leiter (5) angenähert ist, dass der wärmeaufnehmende Flächenabschnitt (7) mit dem elektrischen Leiter (5) eine thermische Wirkverbindung eingeht, um Abwärme des elektrischen Leiters (5) zu dem wärmeabgebenden Flächenabschnitt (8) abzuführen.

2. Leitungsanordnung (1) nach Anspruch 1,
**dadurch gekennzeichnet, dass**
der wenigstens eine elektrische Isolator
a) als elektrisch isolierende Umhüllung (6) ausgebildet ist, wobei der wenigstens eine elektrische Leiter (5) zumindest abschnittsweise entlang der Längsachse (L) innerhalb der elektrisch isolierenden Umhüllung (6) verläuft; und/oder
b) als elektrisch isolierendes Distanzelement (4) ausgebildet ist, wobei zumindest zwei der elektrischen Leiter (5) mittels des elektrisch isolierenden Distanzelements (4) voneinander beabstandet sind.

3. Leitungsanordnung (1) nach Anspruch 1 oder 2,
**dadurch gekennzeichnet, dass**
der Wärmeableiter (3) aus einem flachen, länglichen Werkstoff ausgebildet ist, und zumindest im Wesentlichen planparallel zu einer Außenfläche des elektrischen Leiters (5) verläuft.

4. Leitungsanordnung (1) nach einem der Ansprüche 1 bis 3,
**dadurch gekennzeichnet, dass**
der wärmeaufnehmende Flächenabschnitt (7) und der wärmeabgebende Flächenabschnitt (8) derart zueinander angeordnet sind, dass ein sich zwischen den Flächenabschnitten (7, 8) ausbildender Wärmepfad (W), entlang dem die Abwärme des elektrischen Leiters (5) abgeführt wird, winklig, vorzugsweise rechtwinklig, zu der Längsachse (L) verläuft.

5. Leitungsanordnung (1) nach einem der Ansprüche 1 bis 4,
**dadurch gekennzeichnet, dass**
der Wärmeableiter (3) eine Mehrzahl von entlang der Längsachse (L) voneinander beabstandeten Fahnen (14) aufweist, die den wärmeabgebenden Flächenabschnitt (8) ausbilden, und die sich seitlichen von dem wenigstens einen wärmeaufnehmenden Flächenabschnitt (7) abzweigen.

6. Leitungsanordnung (1) nach einem der Ansprüche 1 bis 5,
**dadurch gekennzeichnet, dass**
der wärmeaufnehmende Flächenabschnitt (7) des Wärmeableiters (3) zumindest im Wesentlichen innerhalb des elektrischen Isolators (4, 6) verläuft, vorzugsweise
a) innerhalb der elektrisch isolierenden Umhüllung (6) verläuft; und/oder
b) innerhalb des elektrisch isolierenden Distanzelements (4) verläuft.

7. Leitungsanordnung (1) nach einem der Ansprüche 1 bis 6,
**dadurch gekennzeichnet, dass**
der wärmeabgebende Flächenabschnitt (8) des Wärmeableiters (3) seitlich aus dem elektrischen Isolator (4, 6), vorzugsweise seitlich aus der elektrisch isolierenden Umhüllung (6) und/oder seitlich aus dem elektrisch isolierenden Distanzelement (4), herausgeführt ist.

8. Leitungsanordnung (1) nach einem der Ansprüche 1 bis 7,
**dadurch gekennzeichnet, dass**
sich der wärmeaufnehmende Flächenabschnitt (7) des Wärmeableiters (3) entlang der Längsachse (L) zumindest im Wesentlichen über die vollständige Länge des elektrischen Leiters (5) erstreckt.

9. Leitungsanordnung (1) nach einem der Ansprüche 1 bis 8,
**dadurch gekennzeichnet, dass**
der wärmeabgebende Flächenabschnitt (8) wenigstens einen Verbindungsbereich (12) aufweist der ausgebildet ist, um den wärmeabgebenden Flächenabschnitt (8) wärmeleitend mit einer Wärmesenke (11) zu verbinden.

10. Leitungsanordnung (1) nach einem der Ansprüche 1 bis 9,
**dadurch gekennzeichnet, dass**
der wärmeabgebende Flächenabschnitt (8) Kühlrippen (17) ausbildet.

11. Leitungsanordnung (1) nach einem der Ansprüche 1 bis 10,
**dadurch gekennzeichnet, dass**
der wärmeabgebende Flächenabschnitt (8) eine Wärmeemissionsschicht (18) aufweist, mit einem größeren Emissionsgrad als der Emissionsgrad des Materials des Wärmeableiters (3) selbst.

12. Leitungsanordnung (1) nach einem der Ansprüche 1 bis 11,
**dadurch gekennzeichnet, dass**
der wenigstens eine elektrische Leiter (5) als länglicher Flachleiter mit einem flachen Querschnitt ausgebildet ist.

13. Leitungsanordnung (1) nach einem der Ansprüche 1 bis 12,
**gekennzeichnet durch**
wenigstens ein Befestigungsmittel zur mechanischen Befestigung der elektrischen Leitung (2) an einer angrenzenden Struktur, vorzugsweise an der Wärmesenke (11).

14. Verbindungsanordnung (20), aufweisend zwei elektrische Verbinder (23) zur elektrischen Verbindung mit einer jeweiligen elektrischen Einrichtung (21, 22), sowie eine Leitungsanordnung (1) gemäß einem der Ansprüche 1 bis 13, wobei die elektrischen Verbinder (23) jeweils mit dem wenigstens einen elektrischen Leiter (5) der Leitungsanordnung (1) elektrisch verbunden sind, und vorzugsweise an sich entlang der Längsachse (L) gegenüberliegenden Enden der Leitungsanordnung (1) angeordnet sind.

15. Energieübertragungssystem (19), aufweisend die Verbindungsanordnung (20) gemäß Anspruch 14, wobei
a) die erste elektrische Einrichtung (21) der beiden elektrischen Einrichtungen (21, 22) als primäre elektrische Energiequelle ausgebildet ist, vorzugsweise als Akkumulator, Akkumulatorverbund oder Ladeeinrichtung zum Aufladen von Akkumulatoren; und wobei
b) die zweite elektrische Einrichtung (22) der beiden elektrischen Einrichtungen (21, 22) als elektrischer Verbraucher, vorzugsweise als Elektromotor, oder als sekundäre Energiequelle, vorzugsweise als Akkumulator oder Akkumulatorverbund, ausgebildet ist.
